# EUROPÄISCHE PATENTSCHRIFT

(11) **EP 2 248 570 B1**
(45) Veröffentlichungstag und Bekanntmachung des Hinweises auf die Patenterteilung: **15.02.2012**
(21) Anmeldenummer: 10450072.3
(22) Anmeldetag: 04.05.2010
(51) Int. Cl.: B01D 24/10, C02F 103/42

(54) **Vorrichtung zur Wasseraufbereitung für ein Schwimmbecken**
Swimming pool water treatment device
Dispositif de traitement de l'eau de piscine

(30) Priorität: 07.05.2009 AT 6942009
(43) Veröffentlichungstag der Anmeldung: 10.11.2010
(73) Patentinhaber: Steinbach VertriebsgmbH, 4311 Schwertberg (AT)
(72) Erfinder: Steinbach, Peter, 4311 Schwertberg (AT)
(74) Vertreter: Hübscher, Helmut

(56) Entgegenhaltungen:
- WO-A1-00/57986
- WO-A1-2004/007374
- WO-A2-95/17939
- WO-A2-2007/096837
- US-A1- 2008 230 455

## Beschreibung

Die Erfindung bezieht sich auf eine Vorrichtung zur Wasseraufbereitung für ein Schwimmbecken mit einem ein Sandfilter aufnehmenden Kessel und mit einem Mehrwegeventil, das Anschlüsse für einen Wasserzulauf und wenigstens zwei Wasserabläufe sowie einen Ventilkörper zum wahlweisen Verbinden dieser Anschlüsse mit Strömungswegen zur Beaufschlagung des Sandfilters und zur Wasserrückführung aus dem Sandfilter umfasst.

Zur Aufbereitung des Wassers eines Schwimmbeckens ist der Einsatz von Filtern üblich, über die das Wasser aus dem Schwimmbecken im Kreislauf gepumpt wird. Für größere Wassermengen kommen häufig Sandfilter zum Einsatz, die durch ein Rückspülen gereinigt werden können. Die WO2007/096837 beschreibt einen derartigen, aus dem Stand der Technik bekannten Sandfilter, der durch Rückspülen gereinigt werden kann. Zu diesem Zweck wird das in einem Kessel vorgesehene Sandfilter über ein Mehrwegeventil so angesteuert, dass es gegensinnig zur Filtrierrichtung durchströmt wird. Die mit dem Spülwasser aus dem Sandfilter ausgeschwemmten Rückstände werden über einen gesonderten Wasserablaufanschluss entsorgt. Bevor die Kreislaufführung des Wassers aus dem Schwimmbecken über das Sandfilter jedoch wieder aufgenommen wird, ist üblicherweise nachzuspülen, um zu verhindern, dass gelöste Rückstände mit dem in Filtrierrichtung das Sandfilter durchströmenden Spülwasser in das Schwimmbecken ausgeschwemmt werden. Das zum Nachspülen dem Schwimmbecken entnommene Spülwasser wird daher ebenfalls verworfen. Nachteilig ist allerdings, dass Sandfilter hinsichtlich der Feinheit der Abscheidung begrenzt sind.

Für kleinere Mengen von im Kreislauf gepumptem Schwimmwasser kommen vor allem Filterkartuschen zum Einsatz, wobei die Reinigungswirkung von der Porosität des Filterkörpers abhängt. Mit zunehmender Feinheit des Filterkörpers steigt bei einer entsprechenden Wasserverschmutzung die Gefahr, dass sich der Filterkörper verlegt und gewartet werden muss. Aus der WO00157986 ist ein Sandfilter bekannt, das mit einer Kartusche versehen ist, die ein Desinfektionsmittel enthält. Hierbei dient die Kartusche allerdings nicht der Feinfiltration.

Der Erfindung liegt somit die Aufgabe zugrunde, eine Filtervorrichtung für das Wasser von Schwimmbecken zu schaffen, die die Vorteile eines Sandfilters mit denen einer Filterkartusche vereinigt, ohne die jeweiligen Nachteile in Kauf nehmen zu müssen.

Ausgehend von einer Vorrichtung zur Wasseraufbereitung für ein Schwimmbecken der eingangs geschilderten Art löst die Erfindung die gestellte Aufgabe dadurch, dass der Kessel im Strömungsweg zur Wasserrückführung eine über eine Überbrückungsleitung in Abhängigkeit von der Strömungsrichtung kurzschließbare Filterkartusche aufweist.

Durch diese Maßnahme wird eine zweistufige Filterung des Schwimmbeckenwassers ermöglicht, wobei über das Sandfilter eine Vorfilterung und über die nachfolgende Filterkartusche eine Feinfilterung vorgenommen wird. Aufgrund der Vorfilterung des der Filterkartusche zugeführten Wassers wird die Filterkartusche nur mit entsprechend feinen Rückständen belastet, was die Wartungszeiten für diese Filterkartuschen trotz eines entsprechend hohen Wasserdurchsatzes erheblich verlängert. Die zur Wartung des Sandfilters erforderliche Rückspülung dieses Filters soll jedoch unter Umgehung der Filterkartusche vorgenommen werden. Aus diesem Grunde ist im Strömungsweg zur Wasserrückführung eine Überbrückungsleitung für die Filterkartusche vorgesehen, die somit über diese Überbrückungsleitung beim Rückspülen des Sandfilters umgangen werden kann. Die Überbrückungsleitung ist somit in Abhängigkeit von der jeweiligen Strömungsrichtung anzusteuern, damit bei einem Wasserkreislauf in Filtrierrichtung die Filterkartusche nach dem Sandfilter durchströmt wird. Mit Hilfe einer solchen Überbrückungsleitung zum Kurzschließen der Filterkartusche kann daher das Sandfilter in herkömmlicher Weise unabhängig von der Filterkartusche durch ein Rückspülen gewartet werden.

Die konstruktive Ausgestaltung einer erfindungsgemäßen Vorrichtung zur Wasseraufbereitung für ein Schwimmbecken Sieht vor, dass der Strömungsweg für die Wasserrückführung eine vom Sandfilter abgeschottete Kesselkammer sowie einen unterhalb des Sandfilters vorgesehenen Bodenraum zur Beaufschlagung der Filterkartusche umfasst, deren Ablaufrohr in der Kesselkammer mündet, wobei im die Kesselkammer vom Bodenraum trennenden Abschnitt der Schottwand zwischen Sandfilter und Kesselkammer wenigstens ein sich in den Bodenraum öffnendes Rückschlagventil vorgesehen wird. Hierdurch bildet der Bodenraum unterhalb des Sandfilters die die Filterkartusche kurzschließende Überbrückungsleitung, die mit der den weiteren Strömungsweg zur Wasserrückführung bildenden Kesselkammer über wenigstens ein Rückschlagventil verbunden ist, sodass bei einem Strömungsweg in Filtrierrichtung, also in Richtung der Wasserrückführung, der Bodenraum gegenüber der Kesselkammer verschlossen ist und das über das Sandfilter vorgefilterte Wasser die an den Bodenraum angeschlossene Filterkartusche beaufschlagt, um über deren Ablaufrohr in die Kesselkammer und von dort zurück in den Wasserablauf des Mehrwegeventils zum Schwimmbecken gepumpt zu werden. Beim Rückspülen des Sandfilters wird Wasser aus dem Schwimmbecken über den Wasserzulauf des Mehrwegeventils in die Kesselkammer gepumpt, aus der das Wasser unter Umgehung der Filterkartusche über das sich in den Bodenraum öffnende Rückschlagventil in den Bodenraum und von dort durch das Sandfilter wieder zum Mehrwegeventil strömt, sodass das mit den Rückständen aus dem Sandfilter belastete Abwasser über einen hierfür vorgesehenen Wasserablauf entsorgt werden kann.

Obwohl im Allgemeinen bei geöffnetem Rückschlagventil aufgrund der Strömungswiderstände das Spülwasser unter Umgehung der Filterkartusche aus dem Kesselraum über den Bodenraum durch das Sandfilter gepumpt wird, kann das Ablaufrohr der Filterkartusche mit einem sich in den Kesselraum öffnenden Rückschlagventil verschließbar sein, um selbst einen Teilstrom des Spülwassers durch die Filterkartusche zu unterbinden.

In der Zeichnung ist der Erfindungsgegenstand beispielsweise dargestellt. Es zeigen
- Fig. 1: einen schematischen Axialschnitt durch eine erfindungsgemäße Vor- richtung zur Wasseraufbereitung für ein Schwimmbecken und

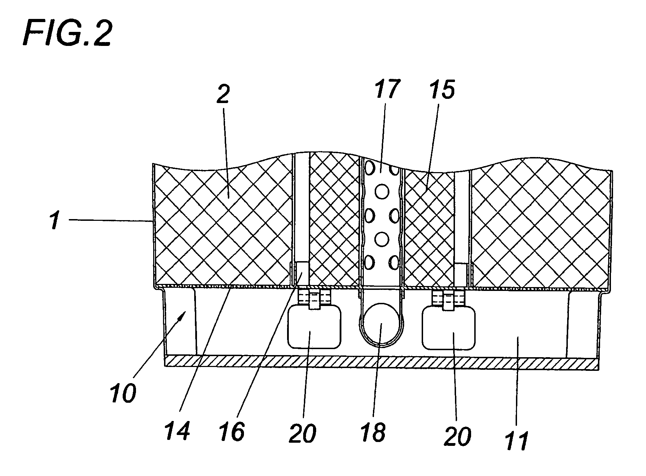

- Fig. 2: diese Vorrichtung ausschnittsweise im Bodenbereich des ein Sandfilter aufnehmenden Kessels in einem Schnitt nach der Linie II-II der Fig. 1.

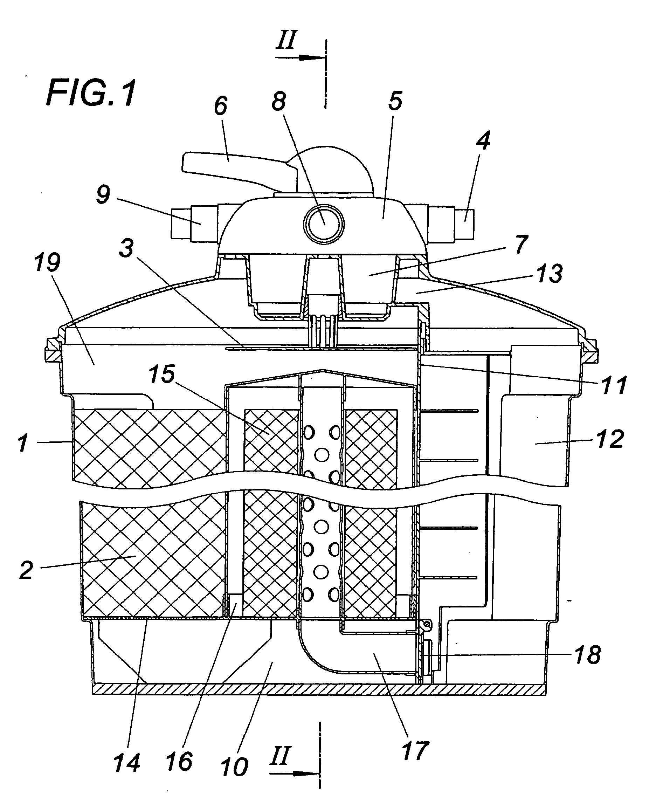

Die dargestellte Vorrichtung zur Wasseraufbereitung für ein Schwimmbecken weist einen Kessel 1 mit einem Sandfilter 2 auf, das über einen Verteilerteller 3 mit dem zu reinigenden Wasser beaufschlagt wird. Das Wasser aus dem Schwimmbecken wird über einen Anschluss 4 eines Mehrwegeventils 5 zugeführt, dessen über eine Handbetätigung 6 verstellbarer Ventilkörper 7 den Anschluss 4 für den Wasserzulauf sowie weitere Anschlüsse 8 und 9 wahlweise mit Strömungswegen zur Beaufschlagung des Sandfilters 2 und zur Wasserrückführung aus dem Sandfilter 2 verbindet. Während zur Beaufschlagung des Sandfilters 2 lediglich innerhalb des Mehrwegeventils 5 ein Strömungsweg vom Anschluss 4 für den Wasserzulauf zum Verteilerteller 3 freigeschaltet werden muss, ist für einen entsprechenden Strömungsweg zur Wasserrückführung vom Sandfilter 2 zum Mehrwegeventil 5 zu sorgen. Dieser Strömungsweg für die Wasserrückführung umfasst innerhalb des Kessels 1 einen Bodenraum 10 unterhalb des Sandfilters 2 und eine durch eine Schottwand 11 vom übrigen Kesselraum getrennte Kesselkammer 12, die über einen Anschlusskanal 13 mit dem Mehrwegeventil 5 verbunden ist, um das aus dem Sandfilter 2 über einen wasserdurchlässigen Filterboden 14 im Bodenraum 10 gesammelte Wasser über den Anschluss 8 des Mehrwegeventils 5 wieder dem Schwimmbecken zuzuführen. Da die Schottwand 11 auch den Bodenraum 10 von der Kesselkammer 12 trennt, wird das im Sandfilter 2 gefilterte Wasser einer Filterkartusche 15 zugeführt, deren Gehäuse über einen Ringspalt 16 an den Bodenraum 10 angeschlossen ist. Das dem Filterkörper durchsetzende Ablaufrohr 17 dieser Filterkartusche 15 mündet in der Kesselkammer 12, und zwar im Bereich des den Bodenraum 10 von der Kesselkammer 12 trennenden Abschnitts der Schottwand 11, wie dies der Fig. 1 entnommen werden kann. Dies bedeutet, dass das mit Hilfe des Sandfilters 2 vorgefilterte Wasser einer Nachfilterung durch die Filterkartusche 15 unterworfen wird, bevor das zweistufig gefilterte Wasser wieder dem Schwimmbecken im Kreislauf zugepumpt wird. Das Ablaufrohr 17 der Filterkartusche 15 ist mit einem sich in Richtung der Kesselkammer 12 öffnenden, gegebenenfalls federbelasteten Rückschlagventil 18 versehen, sodass die Filterkartusche 15 nur in einer Richtung vom zu filtrierenden Wasser durchströmt werden kann.

Zum Rückspülen des Sandfilters 2 wird das Mehrwegeventil 5 so umgesteuert, dass der Anschluss 4 für den Wasserzulauf aus dem Schwimmbecken mit dem Anschlusskanal 13 der Kesselkammer 12 und der Kesselraum 19 oberhalb des Sandfilters 2 mit dem Anschluss 9 für den Wasserablauf beispielsweise zu einem Abwasserkanal verbunden werden. Da im die Kesselkammer 12 vom Bodenraum 10 trennenden Abschnitt der Schottwand 11 in den Bodenraum 10 öffnende, allenfalls federbeaufschlagte Rückschlagventile 20 vorgesehen sind, wird das über das Mehrwegeventil 5 aus dem Schwimmbecken in die Kesselkammer 12 gepumpte Wasser unter Umgehung der Filterkartusche 15 in den Bodenraum 10 gefördert und durchströmt von dort über den Filterboden 14 das Sandfilter 2 gegensinnig zur Filtrierrichtung, sodass die im Sandfilter 2 gefangenen Rückstände ausgespült und mit dem Spülwasser in den Abwasserkanal ausgetragen werden. Der Bodenraum 10 bildet in diesem Fall eine Überbrückungsleitung zum Kurzschließen der Filterkartusche15.

Nach einem üblichen Nachspülen, bei dem das aus dem Schwimmbecken gepumpte Wasser in der vorgesehenen Weise zweistufig gefiltert, aber nicht ins Schwimmbecken zurückgefördert, sondern über den Anschluss 9 verworfen wird, steht die Vorrichtung wieder für die Aufbereitung des Schwimmbeckenwassers durch eine zweistufige Filterung mittels eines Sandfilters 2 und einer nachfolgenden Filterkartusche 15 zur Verfügung.

Wird das Wasser aus dem Schwimmbecken lediglich zur Umwälzung über das Mehrwegeventil 5 in einem Kreislauf geführt, indem die Anschlüsse 4 und 8 über den Ventilkörper 7 miteinander verbunden werden, so liegen das Sandfilter 2 und die Filterkartusche 15 außerhalb des Wasserkreislaufs.

## Patentansprüche

1. Vorrichtung zur Wasseraufbereitung für ein Schwimmbecken mit einem ein Sandfilter (2) aufnehmenden Kessel (1) und mit einem Mehrwegeventil (5), das Anschlüsse (4, 8, 9) für einen Wasserzulauf und wenigstens zwei Wasserabläufe sowie einen Ventilkörper (7) zum wahlweisen Verbinden dieser Anschlüsse (4, 8, 9) mit Strömungswegen zur Beaufschlagung des Sandfilters (2) und zur Wasserrückführung aus dem Sandfilter (2) umfasst, wobei der Kessel (1) im Strömungsweg zur Wasserrückführung eine über eine Überbrückungsleitung in Abhängigkeit von der Strömungsrichtung kurzschließbare Filterkartusche (15) aufweist, **dadurch gekennzeichnet, dass** der Strömungsweg für die Wasserrückführung eine vom Sandfilter (2) abgeschottete Kesselkammer (12) sowie einen unterhalb des Sandfilters (2) vorgesehenen Bodenraum (10) zur Beaufschlagung der Filterkartusche (15) umfasst, deren Ablaufrohr (17) in der Kesselkammer (12) mündet, und dass im die Kesselkammer (12) vom Bodenraum (10) trennenden Abschnitt der Schottwand (11) zwischen Sandfilter (2) und Kesselkammer (12) wenigstens ein sich in den Bodenraum (10) öffnendes Rückschlagventil (20) vorgesehen ist.

2. Vorrichtung nach Anspruch 1, **dadurch gekennzeichnet, dass** das Ablaufrohr (17) der Filterkartusche (15) mit einem sich in die Kesselkammer (12) öffnenden Rückschlagventil (18) verschließbar ist.

## Claims

1. Water treatment device for a swimming pool having a vessel (1) receiving a sand filter (2) and haying a multi-way valve (5) which includes connections (4, 8, 9) for a water inlet and at least two water outlets and a valve body (7) for selective connection of these connections (4, 8, 9) to flow paths for acting upon the sand filter (2) and for the recirculation of water from the sand filter (2), wherein, is the flow path for the recirculation of water, the vessel (1) has a filter cartridge (15) which can be short-circuited via a bridging line in dependence upon the flow direction, **characterised in that** the flow path for the recirculation of water has a vessel chamber (12), separate from the sand filter (2), and a base chamber (10) provided below the sand filter (2) for acting upon the filter cartridge (15), the outlet pipe (17) of which issues in the vessel chamber (12), and that in the portion of the bulkhead wall (11) between the sand filter (2) and the vessel chamber (12), separating the vessel chamber (12) from the base chamber (10), at least one non-return valve (20) opening into the base chamber (10) is provided.

2. Device as claimed in claim 1, **characterised in that** the outlet pipe (17) of the filter cartridge (15) can be closed with a non-return valve (18) opening into the vessel chamber (12).

## Revendications

1. Dispositif pour le traitement de l'eau d'une piscine avec une cuve (1) comportant un filtre à sable (2) et une vanne à plusieurs voies (5) qui comprend des raccords (4, 8, 9) pour une arrivée d'eau et au moins deux évacuations d'eau, ainsi qu'un corps de vanne (7) pour le raccordement au choix de ces raccords (4, 8, 9) à des trajets d'écoulement pour l'alimentation du filtre à sable (2) et pour le retour de l'eau à partir du filtre à sable (2), la cuve (1) présentant dans le trajet d'écoulement pour le retour de l'eau une cartouche filtrante (15) pouvant être court-circuitée par le biais d'une conduite de pontage en fonction du sens d'écoulement, **caractérisé en ce que** le trajet d'écoulement pour le retour de l'eau comprend une chambre de cuve (12) isolée du filtre à sable (2) ainsi qu'un espace de fond (10) prévu sous le filtre à sable (2) pour l'alimentation de la cartouche filtrante (15) dont le tuyau d'évacuation (17) débouche dans la chambre de cuve (12) et **en ce que**, dans la section séparant la chambre de cuve (12) de l'espace de fond (10), il est prévu, entre le filtre à sable (2) et la chambre de cuve (12), au moins un clapet anti-retour (20) s'ouvrant dans l'espace de fond (10).

2. Dispositif selon la revendication 1, **caractérisé en ce que** le tuyau d'évacuation (17) de la cartouche filtrante (15) peut être obturé avec un clapet anti-retour (18) s'ouvrant dans la chambre de cuve (12).
